# EUROPEAN PATENT SPECIFICATION

(11) **EP 4 112 430 B1**
(45) Date of publication and mention of the grant of the patent: **09.10.2024**
(21) Application number: 21760524.5
(22) Date of filing: 25.02.2021
(51) Int. Cl.: B62J 37/00, B62J 35/00, B62K 11/10

(54) **SADDLE-TYPE VEHICLE**
SATTELFAHRZEUG
VÉHICULE DE TYPE À SELLE

(30) Priority: 26.02.2020 JP 2020030103
(43) Date of publication of application: 04.01.2023
(73) Proprietor: Yamaha Hatsudoki Kabushiki Kaisha, Iwata-shi, Shizuoka 438-8501 (JP)
(72) Inventor: KAWAGUCHI, Tsutomu, Iwata-shi Shizuoka 438-8501 (JP)
(74) Representative: Studio Torta S.p.A.
(86) International application number: PCT/JP2021/007077
(87) International publication number: WO 2021/172422

(56) References cited:
- EP-A1- 2 221 206
- EP-B1- 2 167 367
- EP-B1- 2 176 115
- WO-A1-2010/013479
- JP-A- 2003 182 674
- JP-A- 2003 182 675
- JP-A- 2003 246 287
- JP-A- 2013 071 471
- JP-A- 2016 016 736

## Description

### TECHNICAL FIELD

The present invention relates to a straddled vehicle.

### BACKGROUND ART

Conventionally, a straddled vehicle includes a fuel tank disposed below a footboard and a fuel filler port disposed on a leg shield. In such a vehicle, a fuel pipe connecting the fuel filler port and the fuel tank is disposed in the leg shield. Further, a down frame extends downward from a head pipe, and the fuel pipe is disposed to the left or right of the down frame and extends upward along the down frame.

The straddled vehicle also includes a canister that collects the vaporized fuel gas in the fuel tank or the fuel pipe. For example, in the vehicle of Japan Laid-open Patent Application Publication No. 2003-237663, the canister is disposed below the footboard and above the fuel tank. Further, in the vehicle of Japan Laid-open Patent Application Publication No. 2003-237663, the canister is disposed together with the fuel pipe between the front cover and the leg shield and to the left of the down frame. Document EP2221206A1 shows the preamble of claim 1.

### SUMMARY OF INVENTION

### Technical Problem

In the vehicle of Japan Laid-open Patent Application Publication No. 2003-237663, the capacity of the fuel tank may be reduced or the vehicle may be enlarged in order to provide a space for arranging the canister below the footboard. In addition, it is necessary to dispose an another member such as a drain hose or a hose for introducing air together with the canister in order to prevent water from entering the canister in rainy weather or when traveling on a flooded road. Therefore, it is necessary to consider the space for arranging such a member.

In the vehicle of Japan Laid-open Patent Application Publication No. 2010-215214, the vehicle may be enlarged in order to provide a space for arranging the canister between the front cover and the leg shield. For example, in a case where the canister is disposed on the lateral side of the fuel pipe, the front cover and the leg shield become large in the vehicle width direction. Alternatively, in a case where the canister is disposed behind the fuel pipe, the leg shield have a shape that projects rearward. In that case, the rider's footrest space becomes narrower, which reduces the comfort. Alternatively, in a case where the canister is disposed in front of the fuel pipe, interference with a movable part such as a front wheel, an under bracket, or a front fork becomes a problem.

An object of the present invention is to suppress water intrusion of the canister, deterioration of rider comfort, and interference with a movable part in a straddled vehicle including a canister, while suppressing an increase in size of the vehicle.

A straddled vehicle according to one aspect of the present invention includes a head pipe, a down frame, a steering shaft, an under bracket, a front fork, a front wheel, a seat, a front cover, a leg shield, a footboard, a fuel tank, a fuel filler port, a fuel pipe, a canister, and a charge tube. The down frame extends downward from the head pipe. The steering shaft is rotatably supported by the head pipe. The under bracket is connected to the steering shaft. The front fork is connected to the under bracket. The front wheel is rotatably supported by the front fork. The seat is located rearward of the head pipe. The front cover is located in front of the head pipe and down frame. The leg shield is disposed behind the front cover and in front of the seat. The footboard is located behind the leg shield and forward and downward of the seat. The fuel tank is located below the footboard. The filler port is located on the leg shield. The fuel pipe is at least partially located between the front cover and the leg shield and connects the fuel filler port and the fuel tank. The canister is located between the front cover and the leg shield and collects the vaporized fuel gas in the fuel tank or the fuel pipe. The charge tube connects the fuel pipe and the canister.

As seen in a vehicle rear view, at least a part of the fuel pipe and the fuel filler port are disposed to a left or right of the down frame. As seen in a vehicle side view, the canister is disposed higher than the footboard. As seen in the vehicle rear view, the canister is disposed on an opposite side to the fuel filler port and the fuel pipe in a vehicle width direction with respect to the down frame. The canister is at least partially located forward of the fuel tank. The charge tube is disposed over a right side and a left side of the down frame. The fuel pipe or fuel filler port includes a charge tube connector to which the charge tube is connected. As seen in the vehicle side view, the charge tube connector is located higher than an upper end of the under bracket.

In the straddled vehicle according to the present aspect, the canister is disposed higher than the footboard as seen in the vehicle side view. Therefore, it is possible to suppress the water intrusion of the canister. As seen in the vehicle rear view, the canister is located on the opposite side to the fuel filler port and the fuel pipe in the vehicle width direction with respect to the down frame. Therefore, it is possible to easily provide a space for arranging the canister between the front cover and the leg shield. As a result, it is possible to suppress the water intrusion of the canister, the deterioration of the rider's comfort, and the interference with a movable part such as the under bracket, while suppressing the increase in size of the vehicle.

Also, since the canister and the fuel pipe are disposed opposite to each other with the down frame in between in the vehicle width direction, the charge tube is disposed over the right side and the left side of the down frame. In this case, the charge tube and the movable part are likely to interfere with each other. However, in the straddled vehicle according to the present aspect, the charge tube connector is disposed higher than the upper end of the under bracket as seen in the vehicle side view. Therefore, the charge tube can be easily disposed while avoiding interference with the movable part such as the under bracket.

The charge tube may be disposed so as to pass in front of the head pipe. In this case, the charge tube can be disposed while avoiding interference with the movable part such as the under bracket.

The straddled vehicle may further include a main switch. The main switch may be disposed on a same side as the canister in the vehicle width direction with respect to the down frame as seen in the vehicle rear view. As seen in the vehicle rear view, the canister may be disposed lower than the main switch. In this case, it is possible to prevent the straddled vehicle from becoming larger in the vehicle width direction. Further, since the main switch is smaller in the vertical direction than the fuel pipe, the main switch and the canister can be compactly disposed in the vertical direction.

As seen in the vehicle rear view, the canister may be at least partially located inward in the vehicle width direction with respect to the main switch. In this case, it is possible to prevent the straddled vehicle from becoming larger in the vehicle width direction.

The charge tube may be disposed so as to pass between the head pipe and the main switch in the vehicle width direction. In this case, the charge tube can be disposed compactly while avoiding interference with the main switch.

As seen in the vehicle side view, the canister may at least partially overlap the fuel pipe. In this case, it is possible to suppress the protrusion of the leg shield rearward as compared with the case where the canister is disposed away from the fuel pipe in the front-rear direction. As a result, the rider's footrest space can be expanded, so that the comfort can be improved.

As seen in the vehicle side view, the canister may at least partially overlap the down frame. In this case, it is possible to suppress the protrusion of the leg shield rearward as compared with the case where the canister is disposed away from the down frame in the front-rear direction. As a result, the rider's footrest space can be expanded, so that the comfort can be improved.

The canister may be located forward of a front end of the fuel tank. The canister may be disposed in a non-overlapping position with the fuel tank in the vehicle plan view. In this case, as seen in the vehicle plan view, it is possible to prevent the position of the footboard from becoming higher than when the canister overlaps with the fuel tank. Thereby, the rider's comfort can be improved.

The charge tube may be at least partially located higher than a lower end of the fuel filler port. In this case, the inflow of fuel from the fuel filler port or the fuel pipe to the canister can be suppressed without adding a member such as a valve.

The charge tube may extend upward from the charge tube connector. The charge tube may overlap with the head pipe at a position higher than the lower end of the fuel filler port as seen in a vehicle front view. In this case, the inflow of fuel from the fuel filler port or the fuel pipe to the canister can be suppressed without adding a member such as a valve.

According to the present invention, in a straddled vehicle including a canister, it is possible to suppress water intrusion of the canister, deterioration of rider comfort, and interference with a movable part while suppressing an increase in size of the vehicle.

### BRIEF DESCRIPTION OF DRAWINGS

FIG. 1 is a side view of a straddled vehicle according to an embodiment.
FIG. 2 is a perspective view of a vehicle body frame and a fuel system.
FIG. 3 is a side view of the vehicle body frame and the fuel system.
FIG. 4 is a front view of the vehicle body frame and the fuel system.
FIG. 5 is a rear view of the vehicle body frame and the fuel system.
FIG. 6 is a plan view of the vehicle body frame.

### DESCRIPTION OF EMBODIMENTS

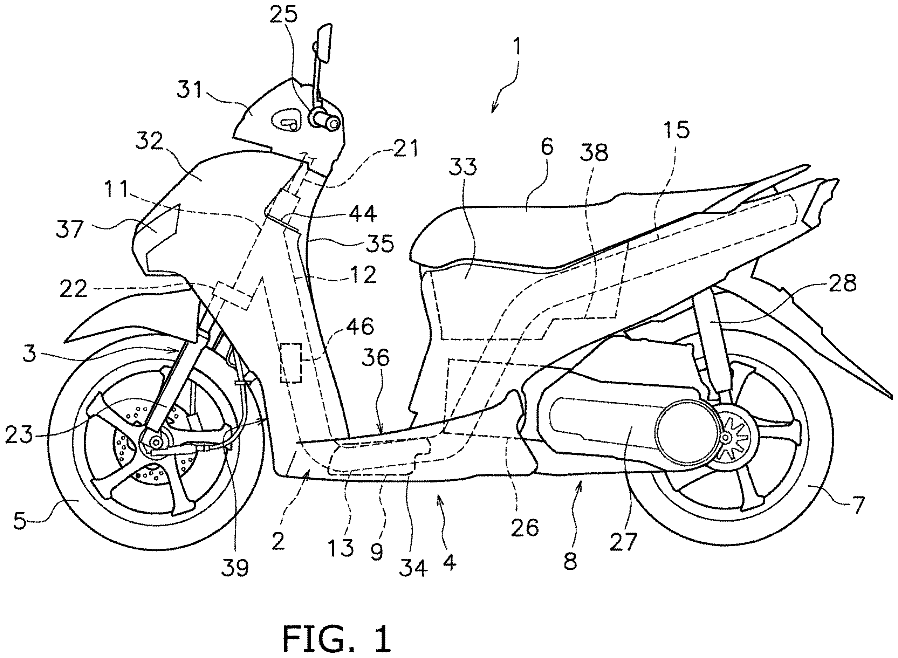

Hereinafter, a straddled vehicle 1 according to an embodiment will be described with reference to the drawings. FIG. 1 is a side view of the straddled vehicle 1. The straddled vehicle 1 according to the present embodiment is a scooter-type vehicle. As shown in FIG. 1, the straddled vehicle 1 includes a vehicle body frame 2, a steering device 3, a vehicle body cover 4, a front wheel 5, a seat 6, a rear wheel 7, a power unit 8, and a fuel tank 9.

In the present specification, the front-rear, up-down, and left-right directions of the straddled vehicle 1 are the front-back, left-right, and up-down directions as seen from a rider on the straddled vehicle 1. As used herein, the term "connection" includes not only a direct connection but also an indirect connection. Further, the "connection" is not limited to the fact that separate members are fixed to each other, but also includes the fact that a plurality of parts of an integrated member are continuous.

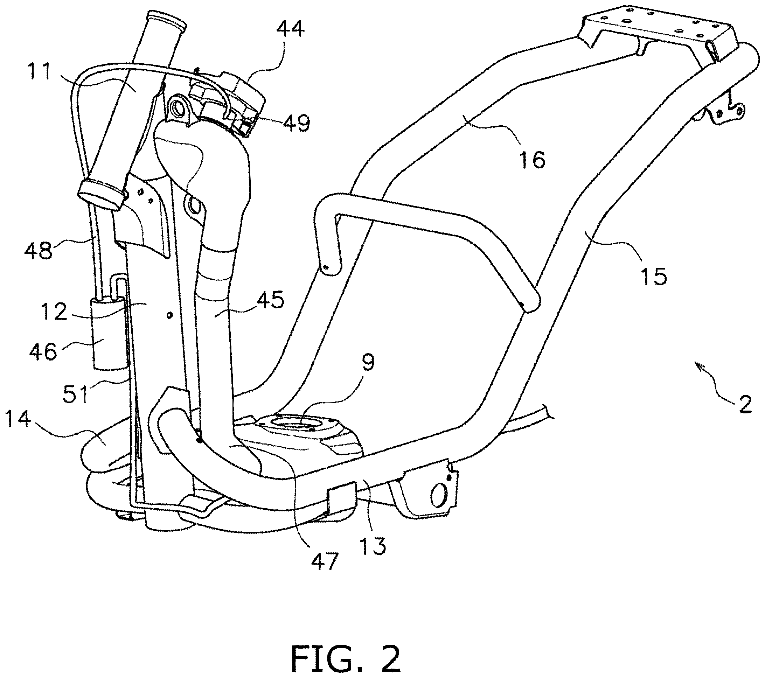

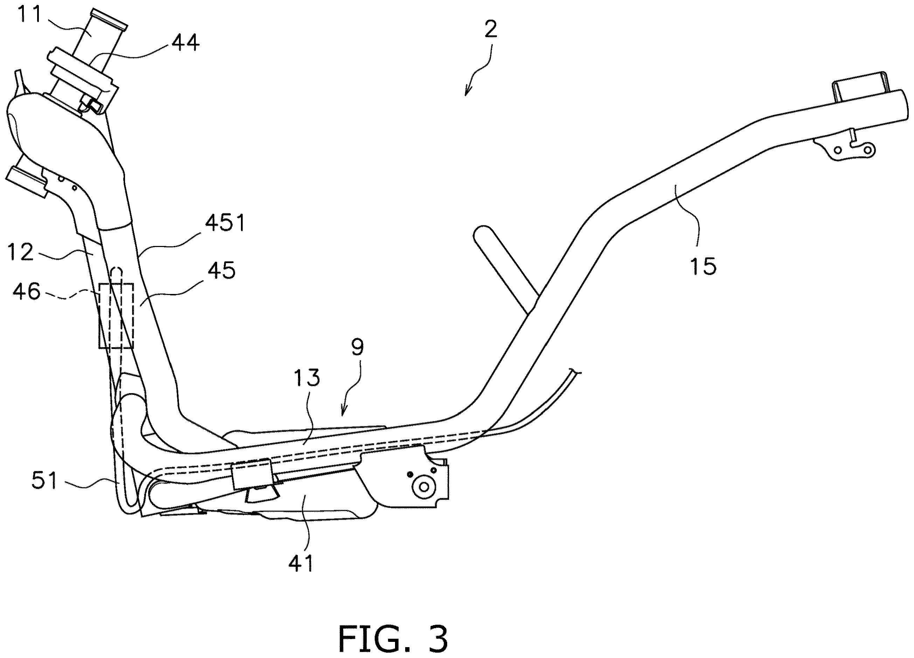

FIG. 2 is a perspective view of the vehicle body frame 2 and a fuel system. FIG. 3 is a side view of the vehicle body frame 2 and the fuel system. As shown in FIGS. 1 to 3, the vehicle body frame 2 includes a head pipe 11, a down frame 12, a first lower frame 13, a second lower frame 14, a first rear frame 15, and a second rear frame 16. As seen in the vehicle side view, the head pipe 11 is inclined rearward and upward. The down frame 12 extends downward from the head pipe 11.

The first lower frame 13 and the second lower frame 14 are connected to the lower portion of the down frame 12. The first lower frame 13 extends leftward and rearward from the down frame 12. The second lower frame 14 extends rightward and rearward from the down frame 12. The first rear frame 15 extends rearward and upward from the first lower frame 13. The second rear frame 16 extends rearward and upward from the second lower frame 14.

The steering device 3 is rotatably supported by the head pipe 11. The steering device 3 includes a steering shaft 21, an under bracket 22, and a front fork 23. The steering shaft 21 is inserted into the head pipe 11. The upper portion of the steering shaft 21 is connected to a handle 25. The steering shaft 21 is rotatably supported by the head pipe 11 to the left and right. The under bracket 22 is connected to the lower portion of the steering shaft 21. The upper end of the front fork 23 is connected to the under bracket 22. The front wheel 5 is rotatably supported by the front fork 23.

The vehicle body cover 4 includes a handle cover 31, a front cover 32, a rear cover 33, a lower cover 34, a leg shield 35, and a mud cover 39. The handle cover 31 covers the front and the rear of the handle 25. A meter panel including a speedometer is attached to the upper surface of the handle cover 31.

The front cover 32 is disposed in front of the head pipe 11 and the down frame 12. A headlight 37 is disposed on the front cover 32. The leg shield 35 is disposed behind the front cover 32. The leg shield 35 is disposed in front of the seat 6. The leg shield 35 is disposed behind the head pipe 11 and the down frame 12. The mud cover 39 is disposed behind the front wheel 5 and in front of the leg shield 35. The rear cover 33 covers the periphery of the first rear frame 15 and the second rear frame 16. The rear cover 33 is disposed below the seat 6.

The seat 6 is disposed rearward of the head pipe 11. The seat 6 is disposed above the first rear frame 15 and the second rear frame 16. A storage box 38 is disposed in the rear cover 33. The storage box 38 is disposed below the seat 6. The lower cover 34 is disposed between the front cover 32 and the rear cover 33. The lower cover 34 covers the periphery of the first lower frame 13 and the second lower frame 14. The upper surface of the lower cover 34 includes the footboard 36.

The footboard 36 is disposed downward and forward of the seat 6. The footboard 36 is located behind the leg shield 35. The footboard 36 is disposed above the first lower frame 13 and the second lower frame 14. That is, as seen in the vehicle plan view, the footboard 36 overlaps the first lower frame 13 and the second lower frame 14. The footboard 36 is disposed between the leg shield 35 and the rear cover 33 in the vehicle front-rear direction. The fuel tank 9 is disposed below the footboard 36. That is, as seen in the vehicle plan view, the fuel tank 9 overlaps with the footboard 36.

The footboard 36 is provided so that the rider can put his/her foot on it. The footboard 36 has a flat shape in the vehicle width direction. However, the footboard 36 is not limited to a flat shape. For example, a center tunnel portion having a shape protruding upward and extending in the front-rear direction may be provided in the center of the footboard 36.

The power unit 8 is disposed below the seat 6. The power unit 8 is swingably supported by the vehicle body frame 2. The power unit 8 rotatably supports the rear wheel 7. The rear wheel 7 is supported by the vehicle body frame 2 via the rear suspension 28. The power unit 8 includes an engine 26 and a transmission 27.

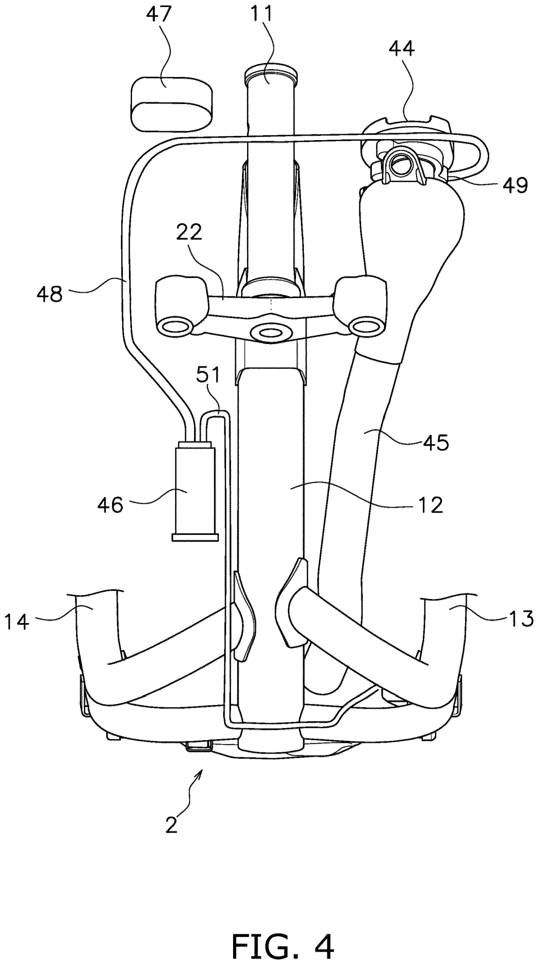

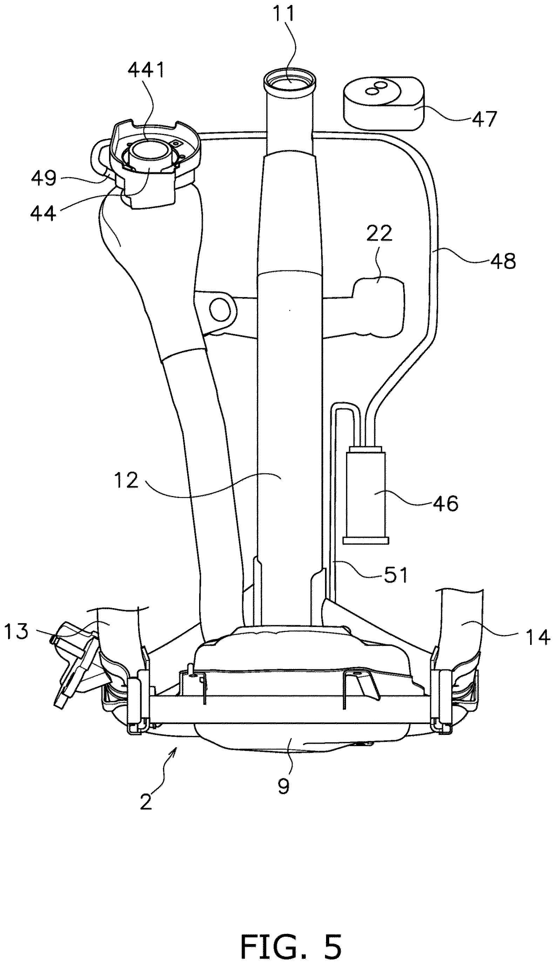

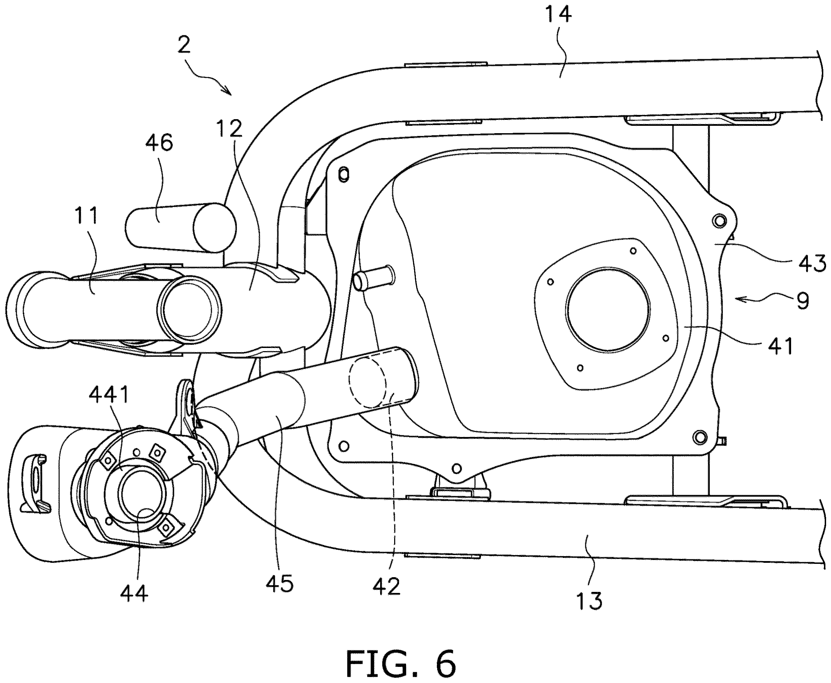

FIG. 4 is a front view of the vehicle body frame 2 and the fuel system. FIG. 5 is a rear view of the vehicle body frame 2 and the fuel system. FIG. 6 is a plan view of the vehicle body frame 2 and the fuel system. The fuel tank 9 is disposed between the first lower frame 13 and the second lower frame 14 in the vehicle width direction. As shown in FIG. 6, the fuel tank 9 includes a tank body 41, an inlet pipe 42, and a flange portion 43. The tank body 41 has a space for storing fuel inside. The inlet pipe 42 is connected to the tank body 41. The flange portion 43 protrudes from the tank body 41 in the front-rear and left-right directions. The flange portion 43 is fixed to the vehicle body frame 2.

As shown in FIGS. 2 to 6, the straddled vehicle 1 includes a fuel filler port 44, a fuel pipe 45, and a canister 46. As shown in FIG. 1, the fuel filler port 44 is disposed on the leg shield 35. As shown in FIG. 3, the fuel filler port 44 overlaps with the head pipe 11 as seen in the vehicle side view. As shown in FIG. 5, the fuel filler port 44 is disposed to the left of the head pipe 11 as seen in the vehicle rear view. The fuel filler port 44 has a tubular shape. The fuel filler port 44 includes an opening 441 that opens upward. A lid (not shown) that is configured to open and close the opening 441 is attached to the fuel filler port 44.

The fuel pipe 45 connects the fuel filler port 44 and the fuel tank 9. The fuel pipe 45 is disposed to the left of the down frame 12 as seen in the vehicle rear view. The fuel pipe 45 is connected to the lower end of the fuel filler port 44. The fuel pipe 45 extends downward from the fuel filler port 44. As seen in the vehicle side view, the fuel pipe 45 is at least partially disposed behind the front wheel 5. The fuel pipe 45 is at least partially located between the mud cover 39 and the leg shield 35. The fuel pipe 45 is at least partially located between the front cover 32 and the leg shield 35. The fuel pipe 45 is connected to the inlet pipe 42 of the fuel tank 9. The fuel pipe 45 extends forward and upward from the fuel tank 9 and extends upward along the down frame 12.

The canister 46 collects the vaporized fuel gas in the fuel tank 9 or the fuel pipe 45. The canister 46 is disposed between the front cover 32 and the leg shield 35. The canister 46 has a tubular shape. However, the shape of the canister 46 is not limited to the tubular shape, and may be another shape. The central axis of the canister 46 extends in the vertical direction.

As shown in FIG. 5, as seen in the vehicle rear view, the canister 46 is disposed on the opposite side to the fuel filler port 44 and the fuel pipe 45 in the vehicle width direction with respect to the down frame 12. In the present embodiment, the fuel pipe 45 is disposed to the left of the down frame 12 as seen in the vehicle rear view. Therefore, the canister 46 is disposed to the right of the down frame 12 as seen in the vehicle rear view. The down frame 12 is disposed between the fuel pipe 45 and the canister 46 in the vehicle width direction. The canister 46 is disposed at a non-overlapping position with the down frame 12 as seen in the vehicle rear view.

As shown in FIG. 1, the canister 46 is disposed higher than the footboard 36 as seen in the vehicle side view. The lower end of the canister 46 is located higher than the footboard 36. The lower end of the canister 46 is located higher than the fuel tank 9. As shown in FIG. 4, the canister 46 is disposed lower than the fuel filler port 44. The canister 46 is disposed lower than the under bracket 22. The canister 46 is at least partially located forward of the fuel tank 9. As shown in FIG. 6, the canister 46 is disposed forward of the front end of the fuel tank 9. The canister 46 is disposed at a non-overlapping position with the fuel tank 9 as seen in the vehicle plan view.

As shown in FIGS. 4 and 5, the straddled vehicle 1 includes a main switch 47. Although the main switch 47 is attached to the leg shield 35, the leg shield 35 is omitted in FIGS. 4 and 5. The main switch 47 includes, for example, a start switch for the power unit 8. The main switch 47 is disposed on the same side as the canister 46 in the vehicle width direction with respect to the down frame 12 as seen in the vehicle rear view. That is, the main switch 47 is disposed to the right of the down frame 12 as seen in the vehicle rear view. The canister 46 is disposed lower than the main switch 47 as seen in the vehicle rear view. As seen in the vehicle rear view, the canister 46 is at least partially located inward in the vehicle width direction with respect to the main switch 47. As seen in the vehicle rear view, the canister 46 is at least partially located inward in the vehicle width direction from the outer lateral end of the main switch 47.

The canister 46 is disposed higher than the first lower frame 13 and the second lower frame 14. As shown in FIG. 3, as seen in the vehicle side view, the canister 46 at least partially overlaps with the fuel pipe 45. As seen in the vehicle side view, the canister 46 is located forward of the rear edge 451 of the fuel pipe 45. As seen in the vehicle side view, the canister 46 at least partially overlaps with the down frame 12. The canister 46 is disposed at a non-overlapping position with the down frame 12 as seen in the vehicle rear view. The canister 46 is disposed at a non-overlapping position with the fuel pipe 45 as seen in the vehicle rear view. The canister 46 is disposed at a non-overlapping position with the under bracket 22 as seen in the vehicle rear view.

The straddled vehicle 1 includes a charge tube 48. The charge tube 48 connects the fuel pipe 45 and the canister 46. The charge tube 48 is disposed so as to pass in front of the head pipe 11. As seen in the vehicle front view, the charge tube 48 overlaps with the head pipe 11. The charge tube 48 is disposed over the right side and the left side of the head pipe 11. The charge tube 48 is disposed over the right side and the left side of the down frame 12. The charge tube 48 is disposed so as to pass between the head pipe 11 and the main switch 47 in the vehicle width direction.

The fuel filler port 44 includes a charge tube connector 49. The charge tube 48 is connected to the charge tube connector 49. The charge tube connector 49 may be included in the fuel pipe 45. As seen in the vehicle side view, the charge tube connector 49 is disposed higher than the upper end of the under bracket 22. The charge tube 48 extends forward and upward from the charge tube connector 49. The charge tube 48 is at least partially located higher than the charge tube connector 49. As seen in the vehicle front view, the charge tube 48 overlaps with the head pipe 11 at a position higher than the lower end of the fuel filler port 44.

The straddled vehicle 1 includes a purge tube 51. The purge tube 51 is connected to the canister 46. The purge tube 51 extends downward from the canister 46 along the down frame 12. The purge tube 51 is disposed from a position rightward of the down frame 12 to a position leftward of the down frame 12. As seen in the vehicle front view, the purge tube 51 overlaps with the down frame 12. The purge tube 51 extends rearward along the first lower frame 13 from a left position of the down frame 12.

In the straddled vehicle 1 according to the present embodiment described above, the canister 46 is disposed higher than the footboard 36 in the vehicle side view. Therefore, it is possible to suppress the water intrusion of the canister 46. As seen in the vehicle rear view, the fuel filler port 44 and the fuel pipe 45 are disposed to the left of the down frame 12, and the canister 46 is disposed to the right of the down frame 12. Therefore, it is possible to easily provide a space for arranging the canister 46 between the front cover 32 and the leg shield 35. As a result, it is possible to suppress the water intrusion of the canister 46, the deterioration of the rider's comfort, and the interference with the movable part such as the under bracket 22 while suppressing the increase in size of the vehicle.

Further, since the canister 46 and the fuel pipe 45 are disposed opposite to each other with the down frame 12 in between in the vehicle width direction, the charge tube 48 is located over the position rightward of the down frame 12 and the position leftward of the down frame 12. In this case, the charge tube 48 and the movable part are likely to interfere with each other. However, in the straddled vehicle 1 according to the present embodiment, the charge tube connector 49 is disposed higher than the upper end of the under bracket 22 as seen in the vehicle side view. Therefore, the charge tube 48 can be easily disposed while avoiding interference with the movable part such as the under bracket 22.

The charge tube 48 is disposed so as to pass in front of the head pipe 11. Therefore, the charge tube 48 can be disposed while avoiding interference with the movable part such as the under bracket 22.

The main switch 47 is disposed to the right of the down frame 12 in the same manner as the canister 46 as seen in the vehicle rear view. The canister 46 is disposed lower than the main switch 47 as seen in the vehicle rear view. Therefore, it is possible to prevent the straddled vehicle 1 from becoming larger in the vehicle width direction. Further, the main switch 47 is smaller in the vertical direction than the fuel pipe 45. Therefore, the main switch 47 and the canister 46 can be compactly disposed in the vertical direction.

As seen in the vehicle rear view, the canister 46 is at least partially located inward in the vehicle width direction with respect to the main switch 47. Therefore, it is possible to prevent the straddled vehicle 1 from becoming larger in the vehicle width direction. The charge tube 48 is disposed so as to pass between the head pipe 11 and the main switch 47 in the vehicle width direction. Therefore, the charge tube 48 can be disposed compactly while avoiding interference with the main switch 47.

As seen in the vehicle side view, the canister 46 at least partially overlaps with the fuel pipe 45. Therefore, as compared with the case where the canister 46 is disposed away from the fuel pipe 45 in the front-rear direction, it is possible to suppress the protrusion of the leg shield 35 rearward. As a result, the rider's footrest space can be expanded, so that the comfort can be improved.

As seen in the vehicle side view, the canister 46 at least partially overlaps with the down frame 12. Therefore, as compared with the case where the canister 46 is disposed away from the down frame 12 in the front-rear direction, it is possible to suppress the protrusion of the leg shield 35 rearward. As a result, the rider's footrest space can be expanded, so that the comfort can be improved.

The canister 46 is disposed forward of the front end of the fuel tank 9. The canister 46 is disposed at a non-overlapping position with the fuel tank 9 as seen in the vehicle plan view. Therefore, as seen in the vehicle plan view, the position of the footboard 36 is suppressed to be higher than that in the case where the canister 46 is disposed at a position overlapping the fuel tank 9. Thereby, the rider's comfort can be improved.

The charge tube 48 is at least partially located higher than the lower end of the fuel filler port 44. Therefore, the inflow of fuel from the fuel filler port 44 or the fuel pipe 45 to the canister 46 can be suppressed without adding a member such as a valve. For example, in a case where the straddled vehicle 1 leans while the fuel tank 9 is full of fuel, the fuel may reach a position near the fuel filler port 44. Even in such a case, by arranging the charge tube 48 as described above, the inflow of fuel into the canister 46 can be suppressed.

The charge tube 48 may extend upward from the charge tube connector 49. The charge tube 48 may overlap with the head pipe 11 at a position higher than the lower end of the fuel filler port 44 as seen in the vehicle front view. In this case, the inflow of fuel from the fuel filler port 44 or the fuel pipe 45 to the canister 46 can be suppressed without adding a member such as a valve.

The structure of the vehicle body frame 2 is not limited to that of the above embodiment and may be modified. For example, the shape or arrangement of the head pipe 11, the down frame 12, the first lower frame 13, the second lower frame 14, the first rear frame 15, or the second rear frame 16 may be changed.

The shape or arrangement of the fuel pipe 45, the fuel filler port 44, the canister 46, or the main switch 47 may be changed. For example, the fuel pipe 45 and the fuel filler port 44 may be disposed upside down from the above embodiment. The canister 46 may be disposed upside down from the above embodiment. The main switch 47 may be disposed upside down from the above embodiment.

As seen in the vehicle rear view, only a part of the fuel pipe 45 may be disposed to the left or right of the down frame 12, and the other part of the fuel pipe 45 may overlap the down frame 12. The canister 46 may be entirely located forward of the fuel tank 9. As seen in the vehicle rear view, only a part of the canister 46 may be located inward in the vehicle width direction with respect to the main switch 47.

The canister 46 may entirely overlap the fuel pipe 45 as seen in the vehicle side view. Alternatively, the canister 46 may be disposed at a non-overlapping position with the fuel pipe 45 as seen in the vehicle side view. Alternatively, the canister 46 may be disposed at a non-overlapping position with the down frame 12 as seen in the vehicle side view. The canister 46 may at least partially overlap the down frame 12 as seen in the vehicle rear view. The charge tube 48 may be located lower than the lower end of the fuel filler port 44.

According to the present invention, in a straddled vehicle including a canister, it is possible to suppress water intrusion of the canister, deterioration of rider comfort, and interference with movable part while suppressing the increase in size of the vehicle.

## Claims

1. A straddled vehicle (1) comprising:
a head pipe (11);
a down frame (12) extending downward from the head pipe (11);
a steering shaft (21) rotatably supported by the head pipe (11);
an under bracket (22) connected to the steering shaft (21);
a front fork (23) connected to the under bracket (22);
a front wheel (5) rotatably supported by the front fork (23);
a seat (6) disposed rearward of the head pipe (11);
a front cover (32) disposed in front of the head pipe (11) and the down frame (12);
a leg shield (35) disposed behind the front cover (32) and in front of the seat (6);
a footboard (36) disposed behind the leg shield (35) and forward and downward of the seat (6);
a fuel tank (9) disposed below the footboard (36);
a fuel filler port (44) disposed on the leg shield (35);
a fuel pipe (45) that is at least partially disposed between the front cover (32) and the leg shield (35) and connects the fuel filler port (44) and the fuel tank (9);
a canister (46) that is disposed between the front cover (32) and the leg shield (35) and collects fuel gas vaporized in the fuel tank (9) or the fuel pipe (45); and a charge tube (48) connecting the fuel pipe (45) and the canister (46),
wherein
as seen in a vehicle rear view, at least a part of the fuel pipe (45)and the fuel filler port (44) are disposed to a left or right of the down frame (12),
as seen in a vehicle side view, the canister (46) is disposed higher than the footboard (36),
the canister (46) is at least partially located forward of the fuel tank (9), and a charge tube connector (49) is disposed higher than an upper end of the under bracket (22) as seen in the vehicle side view, **characterized in that**, as seen in the vehicle rear view, the canister is disposed on an opposite side to the fuel filler port and the fuel pipe in a vehicle width direction with respect to the down frame, and the charge tube is disposed over a right side and a left side of the down frame, the fuel pipe or the fuel filler port includes the charge tube connector to which the charge tube is connected,

2. The straddled vehicle according to claim 1, wherein
the charge tube (48) is disposed so as to pass in front of the head pipe (11).

3. The straddled vehicle according to claim 1 or 2, further comprising:
a main switch (47) disposed on a same side as the canister (46) in the vehicle width direction with respect to the down frame (12) as seen in the vehicle rear view, wherein
the canister (46) is disposed lower than the main switch (47) as seen in the vehicle rear view.

4. The straddled vehicle according to claim 3, wherein
as seen in the vehicle rear view, the canister (46) is at least partially disposed inward in the vehicle width direction with respect to the main switch (47).

5. The straddled vehicle according to claim 3 or 4, wherein
the charge tube (48) is disposed so as to pass between the head pipe (11) and the main switch (47) in the vehicle width direction.

6. The straddled vehicle according to any one of claims 1 to 5, wherein
the canister (46) at least partially overlaps with the fuel pipe (45) as seen in the vehicle side view.

7. The straddled vehicle according to any one of claims 1 to 6, wherein
the canister (46) at least partially overlaps with the down frame (12) as seen in the vehicle side view.

8. The straddled vehicle according to any one of claims 1 to 7, wherein
the canister (46) is disposed forward of a front end of the fuel tank (9), and
the canister (46) is disposed at a non-overlapping position with the fuel tank (9) as seen in a vehicle plan view.

9. The straddled vehicle according to any one of claims 1 to 8, wherein
the charge tube (48) is at least partially disposed higher than a lower end of the fuel filler port (44).

10. The straddled vehicle according to any one of claims 1 to 9, wherein
the charge tube (46) extends upward from the charge tube connector (49) and overlaps with the head pipe (11) at a position higher than the lower end of the fuel filler port (44) as seen in a vehicle front view.

## Patentansprüche

1. Spreizsitz-Fahrzeug (1), das umfasst:
ein Steuerrohr (11);
ein Unterrohr (12), das sich von dem Steuerrohr (11) nach unten erstreckt;
eine Lenkwelle (21), die über das Steuerrohr (11) drehbar gelagert ist;
eine untere Gabelbrücke (22), die mit der Lenkwelle (21) verbunden ist;
eine Vorderradgabel (23), die mit der unteren Gabelbrücke (22) verbunden ist;
ein Vorderrad (5), das über die Vorderradgabel (23) drehbar gelagert ist;
einen Sitz (6), der hinter dem Steuerrohr (11) angeordnet ist;
eine vordere Verkleidung (32), die vor dem Steuerrohr (11) und dem Unterrohr (12) angeordnet ist;
einen Beinschutz (35), der hinter der vorderen Verkleidung (32) und vor dem Sitz (6) angeordnet ist,
ein Trittbrett (36), das hinter dem Beinschutz (35) sowie vor und unter dem Sitz (6) angeordnet ist;
einen Kraftstofftank (9), der unter dem Trittbrett (36) angeordnet ist;
einen Kraftstoffeinfüllstutzen (44), der an dem Beinschutz (35) angeordnet ist;
eine Kraftstoffleitung (45), die wenigstens teilweise zwischen der vorderen Verkleidung (32) und dem Beinschutz (35) angeordnet ist und den Kraftstoffeinfüllstutzen (44) mit dem Kraftstofftank (9) verbindet;
einen Behälter (46), der zwischen der vorderen Verkleidung (32) und dem Beinschutz (35) angeordnet ist und in dem Kraftstofftank (9) oder in der Kraftstoffleitung (45) verdampftes Kraftstoffgas auffängt; sowie
ein Zuleitrohr (48), das die Kraftstoffleitung (45) und den Behälter (46) verbindet,
wobei
wenigstens ein Teil der Kraftstoffleitung (45) sowie der Kraftstoffeinfüllstutzen (44), in einer Fahrzeug-Hinteransicht gesehen, links oder rechts von dem Unterrohr (12) angeordnet sind,
der Behälter (46), in einer Fahrzeug-Seitenansicht gesehen, höher angeordnet ist als das Trittbrett (36),
der Behälter (46) sich wenigstens teilweise vor dem Kraftstofftank (9) befindet, und
ein Zuleitrohr-Verbinder (49), in der Fahrzeug-Seitenansicht gesehen, höher angeordnet ist als ein oberes Ende der unteren Gabelbrücke (22), **dadurch gekennzeichnet, dass** der Behälter in einer Fahrzeug-Breitenrichtung an einer in Bezug auf das Unterrohr dem Kraftstoffeinfüllstutzen und der Kraftstoffleitung gegenüberliegenden Seite angeordnet ist, und das Zuleitrohr über einer rechten Seite und einer linken Seite des Unterrohrs angeordnet ist, wobei die Kraftstoffleitung oder der Kraftstoffeinfüllstutzen den Zuleitrohr-Verbinder einschließt, mit dem das Zuleitrohr verbunden ist.

2. Spreizsitz-Fahrzeug nach Anspruch 1, wobei
das Zuleitrohr (48) so angeordnet ist, dass es vor dem Steuerrohr (11) verläuft.

3. Spreizsitz Fahrzeug nach Anspruch 1 oder 2, in das des Weiteren umfasst:
einen Hauptschalter (47), der, in der Fahrzeug-Hinteransicht gesehen, an der gleichen Seite in der Fahrzeug-Breitenrichtung in Bezug auf das Unterrohr (12) angeordnet ist wie der Behälter (46), wobei
der Behälter (46), in der Fahrzeug-Hinteransicht gesehen, niedriger angeordnet ist als der Hauptschalter (47).

4. Spreizsitz-Fahrzeug nach Anspruch 3, wobei
der Behälter (46), in der Fahrzeug-Hinteransicht gesehen, in Bezug auf den Hauptschalter (47) in der Fahrzeug-Breitenrichtung wenigstens teilweise innenliegend angeordnet ist.

5. Spreizsitz-Fahrzeug nach Anspruch 3 oder 4, wobei
das Zuleitrohr (48) in der Fahrzeug-Breitenrichtung so angeordnet ist, dass es zwischen dem Steuerrohr (11) und dem Hauptschalter (47) verläuft.

6. Spreizsitz-Fahrzeug nach einem der Ansprüche 1 bis 5, wobei
sich der Behälter (46), in der Fahrzeug-Seitenansicht gesehen, wenigstens teilweise mit der Kraftstoffleitung (45) überlappt.

7. Spreizsitz-Fahrzeug nach einem der Ansprüche 1 bis 6, wobei
sich der Behälter (46), in der Fahrzeug-Seitenansicht gesehen, wenigstens teilweise mit dem Unterrohr (12) überlappt.

8. Spreizsitz-Fahrzeug nach einem der Ansprüche 1 bis 7, wobei
der Behälter (46) vor einem vorderen Ende des Kraftstofftanks (9) angeordnet ist; und
der Behälter (46), in einer Fahrzeug-Draufsicht gesehen, an einer Position angeordnet ist, an der er sich nicht mit dem Kraftstofftank (9) überlappt.

9. Spreizsitz-Fahrzeug nach einem der Ansprüche 1 bis 8, wobei
das Zuleitrohr (48) wenigstens teilweise höher angeordnet ist als ein unteres Ende des Kraftstoffeinfüllstutzens (44).

10. Spreizsitz-Fahrzeug nach einem der Ansprüche 1 bis 9, wobei
sich das Zuleitrohr (46) von dem Zuleitrohr-Verbinder (49) nach oben erstreckt und sich, in einer Fahrzeug-Vorderansicht gesehen, mit dem Steuerrohr (11) an einer Position überlappt, die höher liegt als das untere Ende des Kraftstoffeinfüllstutzens (44).

## Revendications

1. Véhicule chevauché (1) comprenant :
un tuyau d'échappement (11) ;
un châssis inférieur (12) s'étendant vers le bas à partir du tuyau d'échappement (11) ;
un arbre de direction (21) supporté de manière rotative par le tuyau d'échappement (11) ;
un support inférieur (22) relié à l'arbre de direction (21) ;
une fourche avant (23) reliée au support inférieur (22) ;
une roue avant (5) supportée de manière rotative par la fourche avant (23) ;
un siège (6) disposé à l'arrière du tuyau d'échappement (11) ;
un capot avant (32) disposé devant le tuyau d'échappement (11) et le châssis inférieur (12) ;
un protège-jambes (35) disposé derrière le capot avant (32) et devant le siège (6) ;
un marchepied (36) disposé derrière le protège-jambes (35) et à l'avant et vers le bas du siège (6) ;
un réservoir de carburant (9) disposé sous le marchepied (36) ;
un orifice de remplissage de carburant (44) disposé sur le protège-jambes (35) ;
un tuyau de carburant (45) qui est au moins partiellement disposé entre le capot avant (32) et le protège-jambes (35) et qui relie l'orifice de remplissage de carburant (44) et le réservoir de carburant (9) ;
un réservoir (46) qui est disposé entre le capot avant (32) et le protège-jambes (35) et recueille le gaz combustible vaporisé dans le réservoir de carburant (9) ou dans le tuyau de carburant (45) ; et
un tube de charge (48) reliant le tuyau de carburant (45) et le réservoir (46),
dans lequel
vu dans une vue arrière du véhicule, au moins une partie du tuyau de carburant (45) et de l'orifice de remplissage de carburant (44) sont disposées à gauche ou à droite du châssis inférieur (12),
vu dans une vue latérale du véhicule, le réservoir (46) est disposé plus haut que le marchepied (36),
le réservoir (46) est au moins partiellement disposé à l'avant du réservoir de carburant (9), et
un connecteur de tube de charge (49) est disposé plus haut qu'une extrémité supérieure du support inférieur (22) vu dans la vue latérale du véhicule, **caractérisé en ce que**, vu dans la vue arrière du véhicule, le réservoir est disposé sur un côté opposé à l'orifice de remplissage de carburant et au tuyau de carburant dans un sens de la largeur du véhicule par rapport au châssis inférieur, et le tube de charge est disposé sur un côté droit et un côté gauche du châssis inférieur, le tuyau de carburant ou l'orifice de remplissage de carburant inclut le connecteur de tube de charge auquel le tube de charge est relié.

2. Véhicule chevauché selon la revendication 1, dans lequel
le tube de charge (48) est disposé de manière à passer devant le tuyau d'échappement (11).

3. Véhicule chevauché selon la revendication 1 ou 2, comprenant en outre :
un interrupteur principal (47) disposé du même côté que le réservoir (46) dans le sens de la largeur du véhicule par rapport au châssis inférieur (12) vu dans la vue arrière du véhicule, dans lequel
le réservoir (46) est disposé plus bas que l'interrupteur principal (47) vu dans la vue arrière du véhicule.

4. Véhicule chevauché selon la revendication 3, dans lequel
vu dans la vue arrière du véhicule, le réservoir (46) est au moins partiellement disposé vers l'intérieur dans le sens de la largeur du véhicule par rapport à l'interrupteur principal (47).

5. Véhicule chevauché selon la revendication 3 ou 4, dans lequel
le tube de charge (48) est disposé de manière à passer entre le tuyau d'échappement (11) et l'interrupteur principal (47) dans le sens de la largeur du véhicule.

6. Véhicule chevauché selon l'une quelconque des revendications 1 à 5, dans lequel
le réservoir (46) recouvre au moins partiellement le tuyau de carburant (45) vu dans la vue latérale du véhicule.

7. Véhicule chevauché selon l'une quelconque des revendications 1 à 6, dans lequel
le réservoir (46) recouvre au moins partiellement le châssis inférieur (12) vu dans la vue latérale du véhicule.

8. Véhicule chevauché selon l'une quelconque des revendications 1 à 7, dans lequel
le réservoir (46) est disposé à l'avant de l'extrémité avant du réservoir de carburant (9), et
le réservoir (46) est disposé de manière à ne pas se superposer au réservoir de carburant (9) vu dans une vue en plan du véhicule.

9. Véhicule chevauché selon l'une quelconque des revendications 1 à 8, dans lequel
le tube de charge (48) est au moins partiellement disposé plus haut que l'extrémité inférieure de l'orifice de remplissage de carburant (44).

10. Véhicule chevauché selon l'une quelconque des revendications 1 à 9, dans lequel
le tube de charge (46) s'étend vers le haut à partir du connecteur de tube de charge (49) et chevauche le tuyau d'échappement (11) à une position plus élevée que l'extrémité inférieure de l'orifice de remplissage de carburant (44) tel que vu dans une vue avant du véhicule.
